# EUROPEAN PATENT SPECIFICATION

(11) **EP 3 283 337 B1**
(45) Date of publication and mention of the grant of the patent: **04.11.2020**
(21) Application number: 16719293.9
(22) Date of filing: 14.04.2016
(51) Int. Cl.: B60S 5/04, F04B 33/00, F17C 7/00

(54) **DEVICE FOR INFLATING A TIRE**
VORRICHTUNG ZUM AUFPUMPEN EINES REIFENS
DISPOSITIF POUR GONFLER UN PNEU

(30) Priority: 17.04.2015 CH 5372015
(43) Date of publication of application: 21.02.2018
(73) Proprietor: Sport Components AG, 8037 Zürich (CH)
(72) Inventor: KOBLER, Pius, 8037 Zürich (CH); EGGERT, Dominik, 8046 Zürich (CH); SPINELLI, Nico, 8037 Zürich (CH); LENZI, Arno, 8003 Zürich (CH)
(74) Representative: Rentsch Partner AG
(86) International application number: PCT/EP2016/058253
(87) International publication number: WO 2016/166233

(56) References cited:
- EP-A2- 1 353 068
- DE-A1-102012 101 158
- DE-C1- 4 120 187
- DE-U1- 9 210 467
- FR-A1- 2 216 516
- FR-A1- 2 991 734
- US-A- 3 934 622
- US-B1- 6 290 476
- US-B2- 6 652 242

## Description

### FIELD OF THE INVENTION

The present invention is directed to a device for inflating a tire, such as a tire of a bicycle, in particular a tubeless tire.

### BACKGROUND OF THE INVENTION

Conventional bicycle tires comprise inner tubes which essentially are airtight torus-shaped balloons with a valve in order to be connected to an inflator. Such inner tubes can in principle be inflated by almost any type of inflator, as long as the inflator allows generating a certain minimum air pressure. Accordingly, such conventional tires can e.g. be inflated by automatic air compressors or even relatively small hand air pumps. Although automatic air compressors will in most situations be preferred due to their operator convenience, small hand air pumps are widespread because they are portable and thus e.g. can also be used during cycling trips where no automatic air compressors are available.

In recent years tubeless tire systems for bicycles have emerged as an alternative to conventional tires with inner tubes. Tubeless tires allow for low tire pressure and hence can be used in order to increase traction on difficult terrain. Therefore they in particular became popular in mountain biking. In tubeless tires, pressurized air is not stored in an airtight inner tube anymore but directly in the inner air chamber defined by the tire and the rim. A major drawback of tubeless tires is that before inflation, the tire beads are just loosely mounted on the rim. In order to obtain a proper sealing between tire and rim, a minimum pressure gradient between a wheel's air chamber and the outside of the wheel (atmosphere) has to be established. This is only possible if for the initial inflation relatively high volumetric flow rates of air during a certain minimum time duration are applied. Hence a quasi-instantaneously sealing of the inner air chamber can be induced. This holds particularly true for mountain bike tires which - when compared to most other types of tires - have a relatively large inner air chamber volume. If the volumetric flow rates are too low or cannot be maintained during a certain minimum time duration, sealing between tire and rim cannot be obtained as the pressure gradient between inside and outside of the tire remains too low due to leakage between the tire and the rim. Consequently for the initial inflation of tubeless tires typically conventional air compressors are used, as they allow for constant high volumetric flow rates of air. Nevertheless, if such compressors are not available - as may be the case during bicycle trips in remote areas - the initial inflation of tubeless tires often turns out to be difficult, if not impossible. The same holds true for those cyclists who do not have access to air compressors at home.

From the prior art several systems for inflating tires are known.

US5012954 was published on 07.05.1991 on behalf of Conrad A. Will and shows a system for inflating tire inner tubes. The disclosed system is directed to the inflation of bicycle tire inner tubes using a sealed cartridge that contains a requisite volume of pressurized gas to inflate a mounted tire inner tube. The invention is directed to offer a system to inflate tire inner tubes quicker, easier and more efficiently than with hand air pumps which are also available for this task. EP1041282 A2 was published on 04.10.2000 on behalf of Barbieri S.n.c. di Barbieri Nadia e Kalman and discloses a carbon-dioxide pump for tires. The pump comprises a nosepiece for coupling the pump to the valve of a tire. The nosepiece is connected to a threaded hole for the hermetic fixing of a bottle that contains carbon dioxide. The bottle is sealed by a membrane that can be pierced by a needle-equipped pin, such that the content of the bottle is delivered to a tire. The pump comprises means in order to interrupt the flow of gas if needed. Furthermore, the pump comprises a mechanism which allows performing manual inflation of a tire. The pump disclosed comprises a handgrip which can be moved back and forth in order to pump air into the tire, similar to a conventional hand air pump.

EP1353068 A2 shows the preambles of claims 1 and 2, was published on 15.10.2003 on behalf of Marui Co. Ltd. Kobe-Shi and discloses an air pump for bicycles. The application is directed to provide an air pump for bicycles capable of swiftly charging a large amount of high-pressure air into a bicycle tire, such as a tubeless tire. Therefore the pump comprises a storage tank for storing compressed air which is charged thereinto from a manual pump through a tank-charging passage. The pump further comprises an air discharge port which can be used to charge air into a bicycle tire. Therefore the air pump comprises a hand-operated valve which allows to establish an air-passage between the storing tank and the air discharge port and high pressure air can be discharged into a bicycle tire from the air storage tank. In order to operate the air pump, the hand-operated valve has to be switched between multiple positions, related to different air-passages. When compared to conventional air pumps, this pump has a relatively bulky design and only a limited portability. Furthermore, the disclosed bulky design makes it difficult to position the air pump between the spokes of a wheel. In addition, the whole air pump is relatively heavy when compared to conventional air pumps, which reduces the portability of such types of air pump systems even further. And on the other hand, the air pumps as disclosed in EP1353068 A2 are relatively expensive as multiple valves and a special air storage tank are needed.

DE 92 10 467 U1 discloses a device for inflating a tire, comprising a pressure tank having a top head with filling valve and a bottom section with refilling valve.

### SUMMARY OF THE INVENTION

Systems known from the prior art which may generate sufficient volumetric flow rates using sealed pressurized cartridges are relatively expensive and rely on a reliable supply of cartridges. Furthermore, the environmental impact of these systems is usually high, as most cartridges are made of metal and intended for single-use only. In addition, pressurized cartridges are prohibited from being brought onto airplanes and thus these systems are not suited for air travel. As well, the consumption of such cartridges becomes high as soon as tire pressure has to be altered repeatedly during bicycle trips in order to adjust it depending on terrain and speed.

Furthermore, some of the systems known from the prior art are relatively bulky and/or heavy. Cyclists therefore will usually refrain from carrying them on bicycle rides, as they mainly serve as backup systems for the unlikely event of total loss of air. As well, most of the inflator systems known from the prior art are relatively expensive as they are built up from a high number of components.

Furthermore, in many of the systems known from the prior art the fluid flow paths between pressurized tanks and outlet ports are winding with relatively small cross sectional areas. This causes high pressure drops along the flow path and consequently also decreases the volumetric flow rates. Hence, the pressure gradient between the pressurized tank and the tire has to be high in order to obtain sufficiently high and constant volumetric flow rates. This in particular holds true if small cartridges are used.

Therefore, one object of the present invention is to provide a device suited for inflating tubeless tires which avoids the problems known from the prior art. According to the present invention, as defined in the independent claims, devices for inflating tubeless tires can be established which are relatively low-priced, compact, lightweight and eco-friendly when compared to the systems known from the prior art.

In order to achieve the objects of the present invention, a device is provided which comprises a housing that comprises at least one first connection port that can be connected to a valve of a wheel. Such a connection port may be formed in various ways, as will be explained in further details below. As well, the housing of a device according to the invention comprises at least one second connection port which comprises connecting means that allow to interconnect the device with a pressure tank that can be filled with pressurized air. Within the context of the invention, "air" should be understood to include any gas or mixture of gases suited for inflating a tire. According to the invention, the at least one first connection port is fluidically connected to the at least one second connection port by means of a fluid passage. A device according to the invention furthermore comprises a first valve. When a pressure tank is connected to the at least one second connection port, the first valve in a closed state is suited to prevent air from flowing from inside of the pressure tank out of the at last one first connection port. When in an open state, the first valve is suited to allow passage of air from inside of the pressure tank through the fluid passage to the at least one first connection port.

The at least one first connection port may be formed as an opening encircled by a sealing element, which may be an elastic material such as a rubber. Hence a particularly airtight connection between the device and a tire valve of a wheel may be obtained which may help to prevent loss of air during an inflation process, as will be explained in further details below.

Alternatively or in addition, the first connection port may also comprise a flange or sleeve (respectively collar) into which the tire valve (respectively valve stem of a wheel) may be at least partially inserted. Thus the airtightness of the connection between the device and the tire valve can be increased. Particularly good results may be obtained if the flange or sleeve comprises a sealing element arranged at the flange or sleeve such that it prevents (or at least decreases) airflow between the outer surface of the tire valve and the inner surface of the flange or sleeve. The sealing element may e.g. comprise an elastic plastic member, such as a sealing ring. The sealing element may also comprise an annular restriction in the opening of the flange or sleeve.

The first connection port may be formed such that it can be connected directly to a tire valve. Alternatively or in addition an adapter may be used in order to establish a connection between the device and a tire valve. Such an adapter may e.g. be screwed to the valve of the wheel and establish a proper connection with the device. In a variation of the invention, multiple different adapters may be applied in order to use the device in combination with multiple different types of tire valves. In order to obtain a highly versatile device, the device may comprise multiple first connection ports having different dimensions. Hence the same device may be used for different types of tire valves and thus the variety of device types can be decreased. Devices according to the invention are advantageous as they allow converting various types of tanks into pressure tanks. Hence, in contrast to the inflators known from the prior art, no purpose-built pressure tanks are needed and instead of that readily available multi-purpose tanks may be applied, as will be explained in further details below. Thus the environmental impact can be reduced, as well as the device may be sold separately from a pressure tank, which decreases packaging size of the device and increases portability.

In a first aspect of the invention, the first valve is a check valve, which is a flap valve. The flap valve is arranged such that it switches from the closed state to the open state when a valve of a tire to be inflated is interconnected with the first connection port, as will be explained in further detail below. The flap valve may close at least one first connection port.

Alternatively, the at least one first connection port comprises a sleeve and the check valve comprises a valve body which has an elongated member. An elongated member may e.g. comprise a tube (pipe). The elongated member is at least partially arranged inside of the sleeve when the check valve is in the closed state. The valve body further comprises a sealing member which in the closed state is in sealing contact with the housing, thereby preventing air from flowing from inside of the pressure tank (or pressure tanks) out of the at least one first connection port. In order the inflate a tire, the elongated member is arranged displaceable inside of the sleeve in a first axial direction of the sleeve such that when a valve of a tire to be inflated is interconnected with the first connection port the elongated member is displaced in the first axial direction and thereby moves the sealing member away from the housing allowing passage of air from inside of the pressure tank through the fluid passage to the at least one first connection port.

Good results may be obtained if the elongated member is formed as a tube having a peripheral wall and comprising at least one center opening and comprising at least one orifice that protrudes the tube wall in (essentially) radial direction. In particular, the center opening may be a blind hole extending in axial direction of the elongated member. The orifice may e.g. be a cross-hole that protrudes the center hole. Alternatively, the elongated member may also be essentially shaped like a (tuning) fork.

In order to make pressurizing of a pressure tank connected to the device more convenient, the device may comprise a return spring that applies a force on the valve body such that when no tire valve is interconnected with the first connection port that sealing member is pressed against the housing with a certain force, ensuring a closed state of the first valve.

In the invention, the device further comprises a second valve that is connectable to an inflator and can be used in order to pressurize the pressure tank with air. Good results may be obtained if the second valve is a standardized tire valve, such as a Schrader, Presto, Dunlop or any other type of valve. By using a standardized valve as a second valve, most conventional air pumps can be interconnected to the device and hence be used in order to pressurize a pressure tank connected to the device.

Depending on the application, the second valve may also serve as a pressure relief valve which limits the pressure that can be applied to the pressure tank and hence prevents supercritical pressurization of the device, respectively of a tank connected to it. A device with such a safety pressure relive valve may e.g. be advantageous if the device is used in combination with certain types of pressure tanks which are sensitive to overpressure and/or do not comprise pressure relief means themselves.

Alternatively or in addition the device may comprises a third valve arranged such that it releases pressurized air from inside of a pressure tank interconnected to the device if the pressure difference between inside of the pressure tank and outside exceeds a specific value, as will be explained in more detail below.

Such a specific value may be chosen such that a tire interconnected with the device can be properly inflated. As well, the specific value may be chosen such that a supercritical loading of the device and/or pressure tank can be avoided.

In a variation of the invention, the device may comprise multiple second connection ports in order to increase the total volume of pressurized air. A relatively big total tank volume with still a particularly ergonomic handling may be obtained with a variation of the device which comprises two second connection ports that both can be connected to a pressure tank. However also further second connection ports may be provided in order to further increase the volume of the pressure tank.

In a variation of the invention the device may also comprise at least one closure to close at least one second connection port and/or at least one first connection port. Such closures may e.g. be used in order to close second connection ports that are not interconnected with pressure tanks, e.g. if only a single pressure tank is applied. Alternatively or in addition closures may be used to obtain a closed container which may be used in order to store goods (such as adapters or tools) when the device is not used.

Alternatively or in addition, the device may comprise an adapter member that can be connected to at least one second connection port in order to interconnect the at least one second connection port with two or more third connection ports, each suited to be interconnected with a pressure tank. Thus, the number of pressure tanks to be interconnected with the device can be increased and consequently also the total volume of pressurized air. However, such an adapter - or a set of multiple varying adapters - may also be used in order to interconnect the device to varying types of pressure tanks.

Good results may be obtained if the connecting means of the at least one second connection port comprises a thread which engages with a mating thread arranged at the pressure tank to be interconnected with the device. Using a thread allows to establish fast and reliable connections.

In a variation of the device according to the present invention, at least one second connection port is designed to be interconnected with a plastic bottle, as e.g. a plastic drinking bottle. Hence the connecting means may correspond to an outer thread of a plastic drinking bottle. Good results may be obtained if the thread is a standard bottle thread, such as a type PCO 21 thread. Using standard threads allows to obtain a highly versatile device that can be combined with various plastic drinking bottles. However, the thread may also be another type of thread - which may be chosen from the group of the most common types of threads used for bottles or other containers in the geographic region where the device is intended to be used.

Using plastic drinking bottles as pressure tanks is particularly advantageous as they are nowadays widespread and therefore readily available. In addition, such bottles are often used by cyclists for water supply and hence may be present during bicycle trips anyway. As well, in many countries appropriate recycling systems are available for the most common types of plastic dinking bottles, such as bottles made from polyethylene terephthalate (PET). Hence, using plastic drinking bottles made from PET is much more environmentally friendly than e.g. using sealed cartridges containing pressurized air, which are known form the prior art and are usually made from metals. By using two plastic drinking bottles, each one having a content of up to e.g. 1.5 or 2 liters, a relatively big pressure tank can be obtained, which allows to operate at low pressure when compared to the small cartridges mentioned above.

Another advantage of such a variation of the invention is that many of the commonly used types of plastic drinking bottles have closures which are designed such that pressure is drained at the thread as soon as a specified threshold value of inner pressure is reached. Hence in such a variation of the invention the connecting means acts as a pressure relief valve. As a result, failure of the device and/or pressure tank due to overpressure can be prevented. Hence the above-mentioned connecting means may be used alternatively or in addition to a separate safety pressure relief valve in order to increase user safety.

Good results may be achieved if the device or part of it has an elongated shape, hence if the housing or part of the housing e.g. essentially has the shape of an elongated cylinder or an elongated pyramid or an elongated cube or an elongated frustum or an elongated cone. Such an elongated shape allows for better access to tire valves which are usually positioned in between or at least close to spokes of the wheels. Compared to some of the relatively bulky inflators known from the prior art, such a variation of the invention has a significantly increased operator convenience. A housing which is shaped like a pyramid, cone, frustum or similar narrowing geometry is not only advantageous with respect to operator convenience, but also to production, as such housings can e.g. be produced by injection molding using relatively simple forming tools.

Particularly good results may be obtained if the cross section of the fluid passage essentially remains constant between the at least one second connection port and the region at the first connection port. Thus a smooth fluid flow path can be achieved which allows for maximum volumetric flow rates from an interconnected pressure tank to the first connection port.

In order to minimize the pressure drop between the inner side of a pressure tank that is interconnected with the device and the first connection port, the wall thickness of the housing may be relatively low if compared to the inflators known from the prior art and hence the fluid passage be designed to have a relatively large cross sectional area. Particularly good results may be obtained if the cross sectional area of the device's fluid passage essentially aligns with the cross sectional area of the pressure tank in the region of at least one second connection port. Thus, very smooth fluid flow paths can be obtained and the pressure drop be minimized.

In a variation of the device, the device may essentially be shaped like the letter "Y"
- respectively have a forked shape. In such a variation, two second connecting ports may be arranged at the tips of each of the arms of the "Y" and at least one first connection port may be arranged at the long stem of the "Y", as will be explained in further details below. In one variation of the device, the shape of the device may be essentially symmetrical, as a capital letter "Y". In another variation, the device may have an asymmetrical shape, like the minor letter "y" according to typeset Calibri. Such forked shapes allow a particularly ergonomic handling of the device, even if it is interconnected with multiple pressure tanks. This particularly holds true if plastic drinking bottles are used as tanks, as these usually have ergonomic grips which can be used in order to hold the inflator assembly. In addition, such forked designs allow to obtain a smooth fluid flow path from both pressure tanks to the first connection port which results in high volumetric flow rates of air
- even at low pressure gradients between the pressure tank and the atmosphere. Following this concept of smooth fluid flow paths, also variations of the device comprising three or more arms are possible.

In a variation of the present invention the device comprises means in order to connect it to a pressure tank made from a highly elastic material. Such a tank may be a rubber balloon or a balloon made from a similar resilient material. Hence, depending on the material used and thickness of its wall, such pressure tanks may allow to generate high volumetric flow rates while still having relatively compact dimensions when not being inflated. In a variation, a pressure tank may be an inner tube of a tire.

A device according to the invention may be made from a metal or a plastic material or any other material. Low-priced devices may be produced using injection molding of plastics. Good results may be obtained if multi-component, in particular two-component, injection molding is used, as such production methods e.g. allow forming sealing elements made from highly elastic materials.

The invention is also directed to an inflator assembly which comprises a device as described herein and at least one pressure tank that is connected to at least one second connection port of said device.

The device (respectively inflator assembly) according to the present invention is not limited to be used for bicycle wheels, but may also be used for other types of wheels, such as of scooters, motorbikes and others.

Good results may be obtained if the device (respectively inflator assembly) according to the present invention is used in combination with tire valves as described in a pending international patent application (PCT/EP2014/078579, entitled "Valve stem system, device and method to test and refill a tubeless tire-sealant", filed on 18 December 2014). Such a combination is highly advantageous as it allows constant high volumetric flow rates while inflating the tire and prevents escape of air from the tire once the device is separated from the tire valve again.

### BRIEF DESCRIPTION OF THE DRAWINGS

The herein described invention will be more fully understood from the detailed description of the given herein below and the accompanying drawings, which should not be considered limiting to the invention described in the appended claims.
- Fig. 1: schematically shows a device in a perspective view;
- Fig. 2: schematically shows a device in a perspective view, the housing of the device partially being clipped for illustrative purposes;
- Fig. 3: schematically shows a device in a perspective view, the housing of the device partially being clipped for illustrative purposes;
- Fig. 4: schematically shows a device with connected tanks, and an air pump connected to the device;
- Fig. 5: schematically shows an inflator assembly comprising a device and two connected tanks, the assembly being arranged to be connected to the valve of a wheel;
- Fig. 6: shows detail A of Fig. 5;
- Fig. 7: schematically shows a device being connected to the valve of a wheel;
- Fig. 8: schematically shows a further embodiment of an inflator assembly in a perspective view;
- Fig. 9: schematically shows a further embodiment of an inflator assembly in a perspective view;
- Fig. 10: schematically shows a portion of the device for inflating a tire of Fig. 8 in another perspective view, the housing of the device as well as the valve body partially being clipped for illustrative purposes;
- Fig. 11: schematically shows the device according to Fig. 10 being interconnected to a hose and connector;
- Fig. 12: schematically shows the device of Fig. 10 in a lateral view prior to being interconnected with a tire valve;
- Fig. 13: schematically shows the device of Fig. 12 when being interconnected with a tire valve.

### DETAILED DESCRIPTION OF THE INVENTION

The foregoing summary, as well as the following detailed description of the preferred embodiments, is better understood when read in conjunction with the appended drawings. For the purposes of illustrating the invention, an embodiment that is presently preferred, in which like numerals represent similar parts throughout the several views of the drawings, it being understood, however, that the invention is not limited to the specific methods and instrumentalities disclosed.

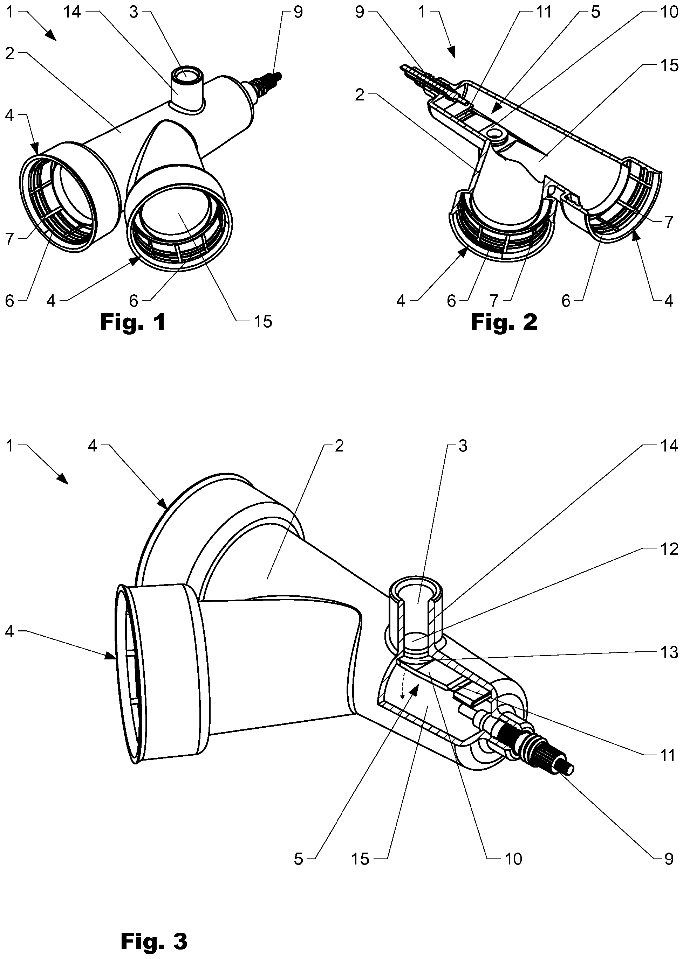

**Figures 1** and **2** schematically show an embodiment of a device 1. The device 1 comprises a housing 2 with a first connection port 3 and two second connection ports 4. The first connection port 3 is formed as a sleeve 14 with an axial opening that is arranged in order to receive the stem valve of a wheel (not shown). The two second connection ports 4 further comprise inner threads 6 which are arranged in order to engage with an outer thread of tanks (not shown in **Figure 1**) to be connected to the device 1. The threads 6 comprise venting recesses 7 as are e.g. known from the caps used for plastic drinking bottles. As can be seen, the device 1 has a forked shape, similar to the shape of the minor letter "y" according to typeset Calibri. Both arms as well as the long stem having a narrowing profile like a frustum, which allows easy demolding/ejection if the device is produced by injection molding.

**Figure 2** shows the device of **Figure 1****,** part of the housing being removed from illustrative purposes. As can be seen, the device comprises an inner valve 10 which in this case is a check valve embodied as flap valve, which in a closed state (as shown) seals the first connection port 3. In order to minimize the pressure drop between the inner side of tanks connected to the second connection ports 4 and the first connection port 3 and also to obtain smooth fluid flow paths, the wall thickness of the housing 2 is relatively low if compared to the inflators known from the prior art and hence the device 1 has a relatively large inner void space that is used as fluid passage 15. If the device 1 is interconnected with plastic drinking bottles, the cross sectional area of the inner space essentially aligns with the cross sectional area of the bottleneck.

**Figure 3** shows the device of **Figures 1** and **2** in a perspective view. Part of the housing 2 has been clipped for illustrative purposes in order to show the region of the first connection port 3. As shown, the first connection port 3 comprises a sleeve 14 which is arranged to receive the valve of a wheel, as will be shown in further detail below. At the first connection port 3, a first valve 5 is arranged. In the embodiment shown, said first valve 5 is a flap valve comprising a flap 10 and a hinge 11, which is a film hinge. The flap 10 can pivot about the hinge 11 between a closed and an open state (indicated by a dotted arrow). In a closed state the first valve 5 prevents air from flowing from the fluid passage 15 of the device 1 through the sleeve 14 (respectively the first connection port 3) outside. The hinge 11 is formed such that the first valve 5 by default is in the closed state. The flap 10 comprises a plug-shaped element 12 which in the closed state of the flap valve is arranged in the first connection port 3 (respectively the sleeve 14). In order to allow an airtight sealing when the first valve 5 is in a closed state, the flap 10 comprises a sealing ring 13 which is arranged on the plug 12 and ensures proper sealing between the flap 10 and the housing 2. The flap 10 is positioned within the housing 2 such that it is reachable from outside by a finger or a pencil or similar elongate tool in order to bring the first valve 10 manually into a closed state if needed. As also shown in **Figure 3**, the variation of a device 1 as shown in the figures comprises a second valve 9 which is a valve known from bicycles. This pressurizing second valve 9 can be connected to a standard air pump in order to pressurize an air tank connected to the device 1, as will be shown in further details below.

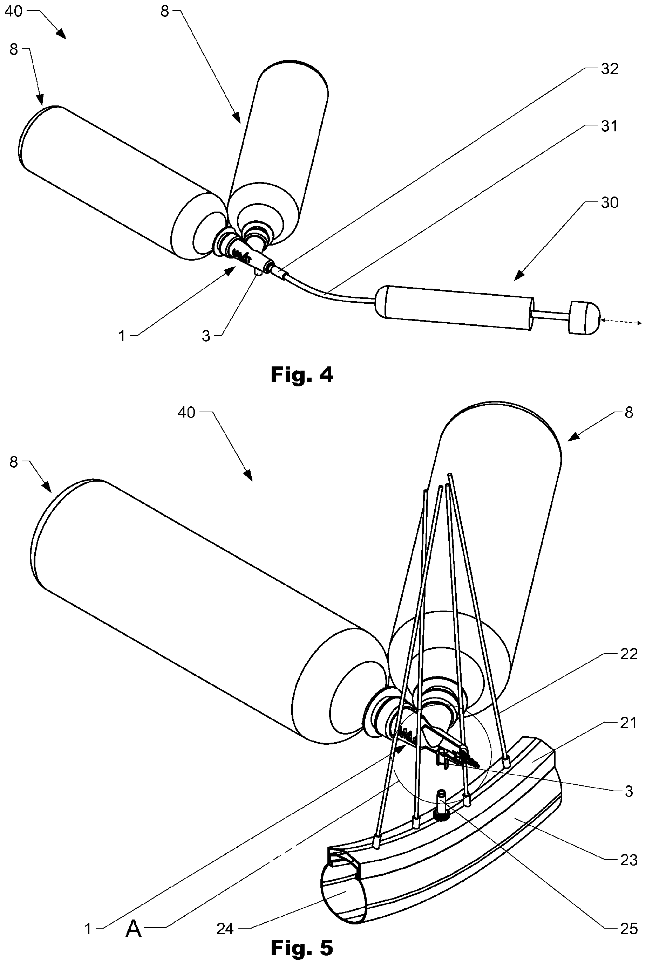

**Figure 4** shows an inflator assembly 40 in order to inflate a tire when being pressurized by an air pump 30. In order to create a pressure tank with a sufficient volume, two individual pressure tanks 8 have been interconnected with the device 1. In the assembly shown, the pressure tanks 8 are plastic drinking bottles. The two plastic drinking bottles 8 are interconnected with the device 1 by means of the outer thread which usually serves to engage with the inner thread of a cap. The two plastic drinking bottles 8 are screwed in the two second connection ports 4, the outer threads of the plastic drinking bottles 8 engaged with the inner threads 6 of the device 1.

As can also be seen in all figures, the two second connection ports 4 are arranged with respect to each other at an angle, which on the one hand allows to connect two relatively large tanks 8 without colliding with each other. On the other hand, such an arrangement allows connecting the device 1 to a wheel, without colliding with the spokes or disk of the wheel, as shown in subsequent **Figures 5** to **7****.**

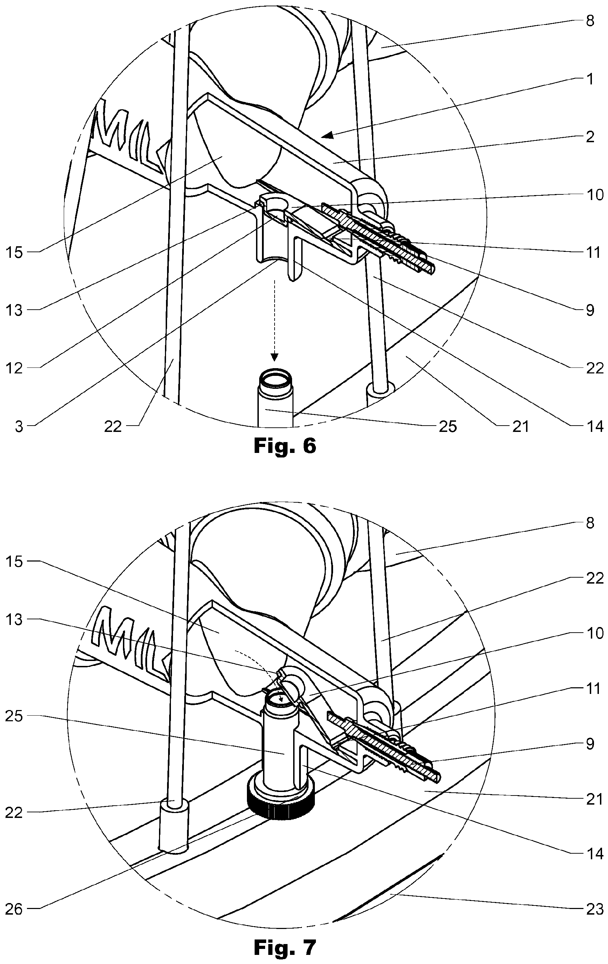

**Figure 6** shows detail A of **Figure 5****,** where the inflator assembly 40 is pressurized and arranged partially in between the spokes and the sleeve 14 of the first connection port 3 being aligned with the valve 25 of the wheel. In **Figure 6****,** part of the housing 2 has been removed for illustrative purposes. As can be seen, the first valve 10 is in a closed state and hence the first connection port 3 is airtightly sealed by the plug 12 and the sealing ring 13. As can be seen, the special shape of the device 1 allows positioning the first connection port 3 in between the spokes 22 although the inflator assembly 40 has a relatively large pressurized volume. This becomes possible due to the special arrangement of the second connection ports 4 in combination with the relatively slim design of the device's 1 housing 2 in the region of the first connection port 3. In order to maximize the volumetric flow rates, which are necessary in order to inflate the tubeless tire 23, the valve core has previously been removed from the valve 25.

In order to induce inflation of the tire 23, the inflator assembly 40 can be lowered on the valve 25, respectively the valve 25 can be inserted in the sleeve 14 of the device 1, as shown in **Figure 7****.** As soon as the valve 25 is inserted to a certain extent, the valve 25 gets into contact with the plug 12 of the flap 10, pushes the plug 12 and subsequently causes the flap 10 to pivot about the film hinge 11. Hence the first valve 5 opens and the pressure gradient between the inner space of the inflator assembly 40 and the inner chamber 24 of the tire 23 (which at the beginning of inflation will essentially be equal to the atmospheric pressure) will cause transfer of gas from inside of the tanks 8 into the inner chamber 24 of the tire 23. In order to establish a proper sealing between the device 1 and the valve 25, the sleeve 14 of the first connection port 3 matches with the outer contour of the valve 25 of the wheel. Hence the gap between the sleeve 14 and the outer surface of the valve stem is relatively small in order to prevent drain of pressure between the sleeve and the outer surface of the valve stem. In addition, the length of the sleeve 14 is such that during the inflation process, the end face of the sleeve 14 aligns with a nut 26 that is used to fasten the valve 25 to the rim 21.

Due to this alignment, drain of pressure between the sleeve 14 and the outer surface of the valve 25 is further reduced.

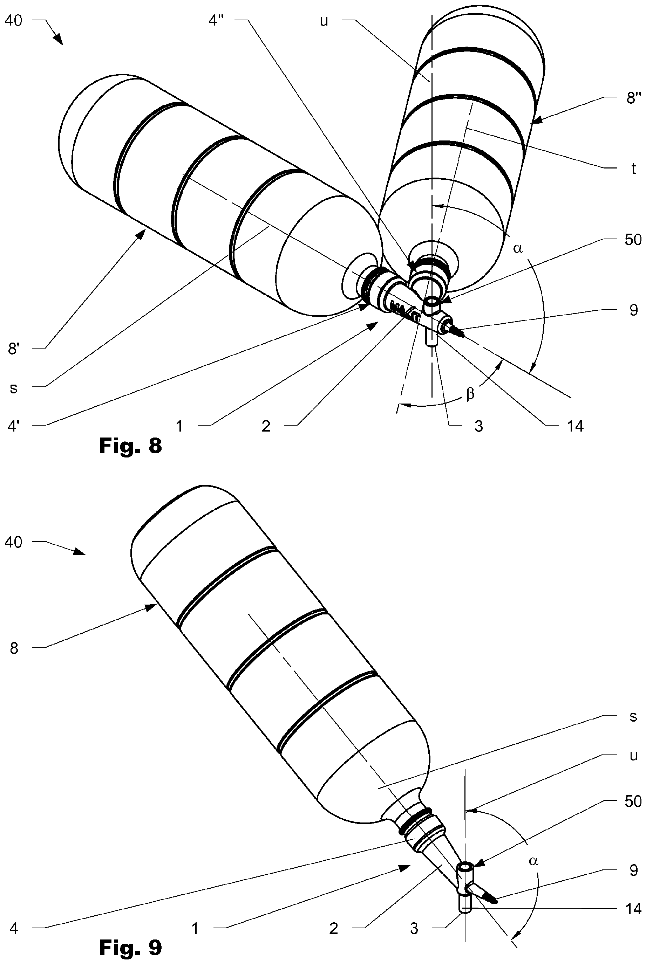

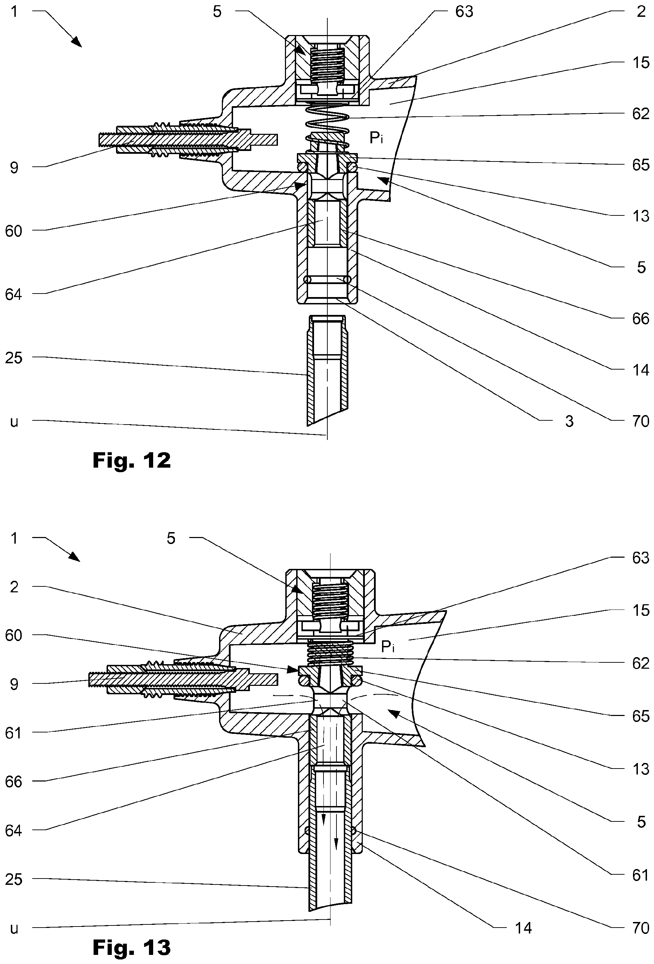

**Figure 8** shows a further embodiment of an inflator assembly 40 with a device 1 that has a forked shape similar to the shape of the device 1 shown in **Figures 1** to **7****.** In the device 1 shown in **Figure 8****,** the housing 2, respectively the first and second connection ports 3, 4', 4", is/are arranged at specific angles α (alpha) and β (beta) with respect to each other, as subsequently further described in detail. A first pressure tank 8' - which in the shown embodiment is a drinking bottle - is interconnected by an outer thread (not shown) to a corresponding inner thread (not shown) of a first second connection port 4'. The first second connection port 4' (respectively the central axis of its inner thread) defines a first axis s. A second pressure tank 8" - which in the shown embodiment is also a drinking bottle - is interconnected by an outer thread (not shown) to a corresponding inner thread (not shown) of a second second connection port 4". The second second connection port 4" (respectively the central axis of its inner thread) defines a second axis t. The first connection port 3 is formed as a sleeve 14 with an axial opening that is arranged in order to receive the tire valve of a wheel, as will be shown with respect to **Figures 12** and **13****.** The sleeve defines a third (center) axis u. Between the first axis s and the third axis u there is an angle α (alpha), which is about 120° (120 degrees of arc). It turned out that such an alignment of the first connection port 3 and first second connection port 4' allows a significantly improved handling (respectively operation) of the inflation device 40 if compared to a device 1 with an angle of 90° (90 degrees of arc) between the first axis s and the third axis u.

On the one and - in particular when grasping the inflator assembly at the first pressure tank 8' - alignment of the first connection port 3 with a tire valve (not shown) turns out to be significantly easier with a device 1 having such an angle α (alpha). On the other hand, a user can apply more controlled, as well as higher, pressure to the device 1 when it is interconnected with a valve. Thus, a more ergonomic operation position of the inflator assembly 40 can be obtained which also helps to establish particularly reliable interconnections to a tire valve. Depending on the type of the first and/or second pressure tank 8', 8", the first angle α (alpha) may be different from about 120° (120 degrees of arc). In particular, it may vary between about 100° (100 degrees of arc) and 170° (170 degrees of arc). Between the first axis s and the second axis t there is an angle β (beta), which is about 75° (75 degrees of arc). It turned out that such an alignment of the first second connection port 4' and second second connection port 4" allows to obtain an arrangement of a first and a second pressure tank 8', 8' which offers very convenient handling of the inflator assembly 40 by holding each one of the two pressure tanks 8', 8" in one hand. It is clear that such an angular arrangement of the first and second connection ports 3, 4', 4" may also be used for the device as shown in **Figures 1** to **7****.**

As well, the device 1 shown comprises a third valve 50, which serves inter alia as a safety pressure relief valve.

**Figure 9** shows another inflator assembly 40 that comprises a single pressure tank 8 - which in the displayed embodiment is a drinking bottle - that is interconnected by an outer thread (not shown) to a corresponding inner thread (not shown) of a second connection port 4. The second connection port 4 (respectively the central axis of its inner thread) defines a first axis s. Like in **Figure 8****,** the first connection port 3 defines a third axis u. Between the first axis s and the second axis u there is an angle α (alpha) which is about 140° (140 degrees of arc) in order to allow highly ergonomic handling of the inflator assembly 40. Depending on the type of pressure tank 8, the first angle α (alpha) may be different from about 140° (140 degrees of arc). In particular, it may vary between about 100° (100 degrees of arc) and 170° (170 degrees of arc). It is clear that such an alignment of the first and the second connection ports 3, 4 is not limited to the embodiment shown in **Figure 9** and hence may also be used for other devices 1 according to the invention.

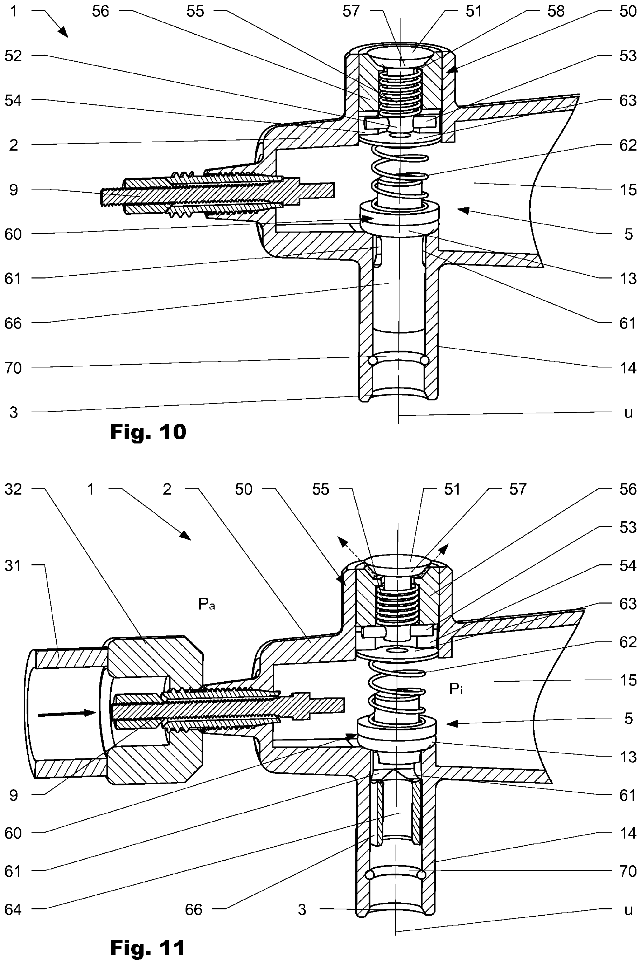

**Figure 10** and **Figure 11** schematically illustrate the design and mode of operation of the third valve 50, which inter alia serves as a safety pressure relief valve and is arranged in the device 1. As shown, the third valve 50 is essentially arranged in the axial projection of the first connection port 3, respectively the sleeve 14. Such an embodiment allows easy manufacturing of the housing 2 by injection molding as well as convenient and/or automated assembly of the device 1 as components of a first valve 5 and third valve 50 may be mounted at the same time via the same opening in the housing 2. The third valve 50 comprises a bushing 56, which is arranged in an opening of the housing 2 of the device 1. The bushing 56 is mechanically interconnected to the opening, e.g. by gluing, interference fit or positive locking. Inside of the bushing 56 a plug 51 having a shaft 52 is arranged, such that it can be moved in axial direction (u-direction) of the bushing 56. In a first position (closed position) as shown in **Figure 10****,** a sealing face 57 of a conical, respectively frustum, part of the plug 51 is in contact with a corresponding face arranged at the bushing 56, fluidically separating inside (respectively the fluid passage 15) and outside of the device 1. The third valve 50 further comprises a pin 53 arranged in the shaft 52 and -the third valve 50 being in an assembled state - arranged in a nut 54 arranged in the bushing 56. On the shaft 52, a helical valve spring 55 is arranged, constrained between the pin 53 and a shoulder 58 arranged at the bushing 56 and pre-tensioned to a specific value.

As schematically shown, a sealing element 70 may be arranged inside of the sleeve 14, forming an annular restriction inside of the sleeve 14 and thus allowing particularly reliable sealing between a tire valve and the sleeve 14 when the tire valve is arranged in the sleeve 14, as will subsequently be shown in more detail. However, such a sealing element 70 is neither mandatory to the invention nor limited to the embodiment of a device as shown in Figure 10.

**Figure 11** schematically illustrates pressurized air/gas (indicated by the continuous arrow) being filled into the device 1 by means of a hose 31. As soon as certain critical pressure difference between the pressure Pi inside of the device 1 and the atmospheric pressure Pa outside of the device 1 is obtained, a trigger force (defined by the geometry of the plug 51, the bushing 56 as well as the pretensioning and spring rate of the valve spring 55) acts on the plug 51 and shaft 52, leading to a displacement of the plug 51 from the first (closed) position to a second (open) position, where the inside of the device 1 is fluidically interconnected with the outside and hence pressurized gas can escape from inside to outside of the device 1, leading to a drop in the pressure difference. Hence, such a third valve 50 may on the one hand be used as a safety pressure relief valve in order to prevent critical pressure differences that may cause structural damage to an inflator assembly. On the other hand such a third valve 50 may be used in order to indicate a when an inflator assembly is sufficiently pressurized in order to be connected to a tire valve, hence serve as a simple pressure gauge.

**Figures 12** and **13** schematically illustrate a further embodiment of a first valve 5. The first valve 5 comprises a valve body 60, which has an elongated member 66 that is cylindrically shaped and has a center opening 64 formed as blind hole. The elongated member 66 further comprises in its wall/shell two radial orifices 60 that are fluidically interconnected with the center opening 64, respectively protrude the center opening 64. The valve body further comprises a peripheral protrusion that acts as a sealing member 64. In a first (closed) state, as shown in **Figure 12****,** the elongated member 66 is arranged inside of the sleeve 14 of the first connection port 3 and closes the first connection port 3 in a sealing manner by pressing a sealing ring 13 which is arranged on the elongated member 64 to the housing 2 by means of the sealing member 64. In order to provide proper sealing a pre-tensioned return spring 62 is arranged between the sealing member 64 of the valve body 60 and an abutment 63 arranged at a certain distance from the sealing member 64.

In order to release pressurized air from inside of the device 1, a tire valve 25 can be inserted into the sleeve 14, as illustrated in **Figure 13****.** As soon as the tire valve 25 gets into contact with the elongated member 66 of the valve body 60, the valve body 60 can be displaced relatively to the housing 2 (respectively sleeve 14) into a second (open) state, where pressurized gas can flow via the two orifices 61 and the center opening 64 to the tire valve 25 in order to inflate a tire connected thereto. As indicated, the sealing element 70 prevents airflow between the outer surface of the tire valve 25 and the inner surface of the sleeve 14.

**NUMBERS**

| | | | |
|---|---|---|---|
| 1 | device | 40 | inflator assembly |
| 2 | housing | 50 | third valve (safety pressure relief valve) |
| 3 | first connection port | | |
| 4, 4', 4" | second connection port | 51 | plug |
| 5 | first valve (check/flap valve) | 52 | shaft |
| 6 | connection means (thread) | 53 | pin |
| 7 | venting recess (slot) | 54 | nut |
| 8, 8'. 8" | pressure tank | 55 | valve spring |
| 9 | second valve | 56 | bushing |
| 10 | flap | 57 | sealing face |
| 11 | hinge (film hinge) | 58 | shoulder |
| 12 | plug | 60 | valve body |
| 13 | sealing ring | 61 | orifice |
| 14 | sleeve (collar) | 62 | return spring |
| 15 | fluid passage | 63 | abutment |
| 20 | wheel | 64 | center opening |
| 21 | rim | 65 | sealing member |
| 22 | spoke | 66 | elongated member |
| 23 | tire | s | first axis |
| 24 | inner chamber (of the tire) | t | second axis |
| 25 | valve | u | third axis |
| 26 | nut | α | first angle (alpha) |
| 30 | air pump (inflator) | β | second angle (beta) |
| 31 | hose | 70 | sealing element |
| 32 | connector | | |

## Claims

1. Device (1) for inflating a tire (23), comprising
a. a housing (2), said housing (2) comprising
i. at least one first connection port (3) and
ii. at least one second connection port (4, 4', 4"), comprising connecting means (6) to interconnect the device (1) with a pressure tank (8, 8', 8") and
iii. the at least one first connection port (3) being fluidically connected to the at least one second connection port (4, 4', 4") by means of a fluid passage (15) and
b. the device (1) further comprising a first valve (5) and
c. when a pressure tank (8, 8', 8") is connected to the at least one second connection port (4, 4', 4"),
i. the first valve (5) in a closed state is suited to prevent air from flowing from inside of the pressure tank (8, 8', 8") out of the at least one first connection port (3) and
ii. the first valve (5) in an open state is suited to allow passage of air from inside of the pressure tank (8, 8', 8") through the fluid passage (15) to the at least one first connection port (3),
d. wherein the device (1) further comprises a second valve (9) that is connectable to an inflator (30) and can be used in order to pressurize the pressure tank (8, 8', 8"), when being connected to the device (1), with air, and
e. the first valve (5) is a check valve, **characterized in that**
f. the check valve is a flap valve which is arranged such that it switches from the closed state to the open state when a valve (25) of a tire (23) to be inflated is interconnected with the first connection port (3).

2. Device (1) for inflating a tire (23), comprising
a. a housing (2), said housing (2) comprising
i. at least one first connection port (3) and
ii. at least one second connection port (4, 4', 4"), comprising connecting means (6) to interconnect the device (1) with a pressure tank (8, 8', 8") and
iii. the at least one first connection port (3) being fluidically connected to the at least one second connection port (4, 4', 4") by means of a fluid passage (15) and
b. the device (1) further comprising a first valve (5) and
c. when the pressure tank (8, 8', 8") is connected to the at least one second connection port (4, 4', 4"),
i. the first valve (5) in a closed state is suited to prevent air from flowing from inside of the pressure tank (8, 8', 8") out of the at least one first connection port (3) and
ii. the first valve (5) in an open state is suited to allow passage of air from inside of the pressure tank (8, 8', 8") through the fluid passage (15) to the at least one first connection port (3),
d. wherein the device (1) further comprises a second valve (9) that is connectable to an inflator (30) and can be used in order to pressurize the pressure tank (8, 8', 8"), when being connected to the device (1), with air, and
e. the first valve (5) is a check valve, **characterized in that**
f. the at least one first connection port (3) comprises a sleeve (14) and the check valve comprises a valve body (60) which has an elongated member (66), said elongated member (66) being at least partially arranged inside of the sleeve (14) when the check valve is in the closed state, and wherein the valve body (60) comprises a sealing member (64) which in the closed state is in sealing contact with the housing (2) and thereby prevents air from flowing from inside of the pressure tank (8, 8', 8") out of the at least one first connection port (3), wherein the elongated member (66) is arranged displaceable inside of the sleeve (14) in a first axial direction of the sleeve (14) such that when a valve (25) of a tire to be inflated is interconnected with the first connection port (3) the elongated member is displaced in the first axial direction and thereby moves the sealing member (64) away from the housing (2) allowing passage of air from inside of the pressure tank (8, 8', 8") through the fluid passage (15) to the at least one first connection port (3).

3. Device according to claim 2, **wherein** the elongated member (66) is formed as a tube or cylinder having a peripheral wall and comprising at least one center opening (64), and comprising at least one orifice (61) that protrudes the tube wall in radial direction; and/or **wherein** the first valve (5) comprises a return spring (62) that applies a force on the valve body (60) such that when no valve (25) is interconnected with the first connection port (3) that sealing member (70) is pressed against the housing (2) with a certain force.

4. Device (1) according to any one of the preceding claims, **wherein** the first connection port (3) is formed such that it can be connected directly to a tire valve (25), or the device (1) is configured such that an adapter can be used in order to establish a connection between the device (1) and a tire valve (25); and/or the second valve (9) is a standardized tire valve.

5. Device (1) according to any one of the preceding claims, **wherein** the second valve (9) serves as a pressure relief valve, which limits the pressure that can be applied to the pressure tank (8, 8', 8").

6. Device (1) according to any of the preceding claims, **wherein** the connecting means (6) arranged at the second connection port (4, 4', 4") comprises a thread (6).

7. Device (1) according to claim 6, wherein the thread (6) is arranged to release pressure from the fluid passage (15) if the pressure exceeds a certain threshold limit; and/or wherein the thread (6) engages with a mating thread arranged at the pressure tank (8, 8', 8") to be interconnected with the device (1).

8. Device (1) according to any of the preceding claims, wherein the at least one second connection port is designed to be interconnected with a plastic bottle, for example a plastic drinking bottle, being the pressure tank (8, 8', 8"); in particular wherein the connecting means correspond to an outer thread of the plastic drinking bottle.

9. Device (1) according to any of the preceding claims, **wherein** the cross section of the fluid passage (15) essentially remains constant between the second connection port (4, 4', 4") and the region at the first connection port (3).

10. Device (1) according to any of the preceding claims, **wherein** the device (1) comprises multiple second connection ports (4, 4', 4"), in particular two second connection ports (4) being arranged with respect to each other at an angle.

11. Device (1) according to any of the preceding claims, **wherein** the housing (2) and/or fluid passage (15) has/have a narrowing geometry.

12. Device (1) according to any of the preceding claims, **wherein** the device (1) comprises a third valve (50) arranged such that it releases pressurized air from inside of a pressure tank (8, 8', 8") interconnected to the device (1) if the pressure difference between inside of the pressure tank (8, 8', 8") and outside exceeds a specific value.

13. Inflator assembly (40) comprising
a. a device (1) according to any of the preceding claims and
b. at least one pressure tank (8, 8', 8") being connected to at least one second connection port (4, 4', 4") of the device (1).

## Patentansprüche

1. Vorrichtung (1) zum Aufpumpen eines Reifens (23), umfassend:
a. ein Gehäuse (2), wobei das Gehäuse (2) folgendes umfasst:
i. zumindest einen ersten Verbindungsanschluss (3) und
ii. zumindest einen zweiten Verbindungsanschluss (4, 4', 4''), der Verbindungsmittel (6) zum Verbinden der Vorrichtung (1) mit einem Druckbehälter (8, 8', 8'') umfasst, und
iii. wobei der zumindest eine erste Verbindungsanschluss (3) mittels eines Fluidkanals (15) fluidtechnisch mit dem zumindest einen zweiten Verbindungsanschluss (4, 4', 4'') verbunden ist und
b. wobei die Vorrichtung (1) ferner ein erstes Ventil (5) umfasst und
c. wobei, wenn ein Druckbehälter (8, 8', 8'') mit dem zumindest einen zweiten Verbindungsanschluss (4, 4', 4'') verbunden ist,
i. das erste Ventil (5) in einem geschlossenen Zustand dazu geeignet ist, zu verhindern, dass Luft aus dem Inneren des Druckbehälters (8, 8', 8'') aus dem zumindest einen ersten Verbindungsanschluss (3) strömt, und
ii. das erste Ventil (5) in einem offenen Zustand dazu geeignet ist, den Durchgang von Luft aus dem Inneren des Druckbehälters (8, 8', 8'') durch den Fluidkanal (15) zum zumindest einen ersten Verbindungsanschluss (3) zu ermöglichen,
d. wobei die Vorrichtung (1) ferner ein zweites Ventil (9) umfasst, das mit einer Pumpeinrichtung (30) verbindbar ist, und dazu verwendet werden kann den Druckbehälter (8, 8', 8'') mit Luft unter Druck zu setzen, wenn er mit der Vorrichtung (1) verbunden ist, und
e. wobei das erste Ventil (5) ein Rückschlagventil ist, **dadurch gekennzeichnet, dass**
f. das Rückschlagventil ein Klappenventil ist, das so angeordnet ist, dass es aus dem geschlossenen Zustand in den offenen Zustand umschaltet, wenn ein Ventil (25) eines aufzupumpenden Reifens (23) mit dem ersten Verbindungsanschluss (3) verbunden wird.

2. Vorrichtung (1) zum Aufpumpen eines Reifens (23), umfassend:
a. ein Gehäuse (2), wobei das Gehäuse (2) Folgendes umfasst:
i. zumindest einen ersten Verbindungsanschluss (3) und
ii. zumindest einen zweiten Verbindungsanschluss (4, 4', 4"), der Verbindungsmittel (6) zum Verbinden der Vorrichtung (1) mit einem Druckbehälter (8, 8', 8'') umfasst, und
iii. wobei der zumindest eine erste Verbindungsanschluss (3) mittels eines Fluidkanals (15) fluidtechnisch mit dem zumindest einen zweiten Verbindungsanschluss (4, 4', 4'') verbunden ist und
b. wobei die Vorrichtung (1) ferner ein erstes Ventil (5) umfasst und
c. wobei, wenn der Druckbehälter (8, 8', 8'') mit dem zumindest einen zweiten Verbindungsanschluss (4, 4', 4'') verbunden ist,
i. das erste Ventil (5) in einem geschlossenen Zustand dazu geeignet ist, zu verhindern, dass Luft aus dem Inneren des Druckbehälters (8, 8', 8'') aus dem zumindest einen ersten Verbindungsanschluss (3) strömt, und
ii. das erste Ventil (5) in einem offenen Zustand dazu geeignet ist, den Durchgang von Luft aus dem Inneren des Druckbehälters (8, 8', 8'') durch den Fluidkanal (15) zum zumindest einen ersten Verbindungsanschluss (3) zu ermöglichen,
d. wobei die Vorrichtung (1) ferner ein zweites Ventil (9) umfasst, das mit einer Pumpeinrichtung (30) verbindbar ist, und dazu verwendet werden kann den Druckbehälter (8, 8', 8'') mit Luft unter Druck zu setzen, wenn er mit der Vorrichtung (1) verbunden ist, und
e. wobei das erste Ventil (5) ein Rückschlagventil ist, **dadurch gekennzeichnet, dass**
f. der zumindest eine erste Verbindungsanschluss (3) eine Hülse (14) umfasst und das Rückschlagventil einen Ventilkörper (60) umfasst, der ein längliches Element (66) aufweist, wobei das längliche Element (66) zumindest teilweise innerhalb der Hülse (14) angeordnet ist, wenn sich das Rückschlagventil im geschlossenen Zustand befindet, und wobei der Ventilkörper (60) ein Dichtungselement (64) umfasst, das im geschlossenen Zustand in Dichtungskontakt mit dem Gehäuse (2) steht und dadurch verhindert, dass Luft aus dem Inneren des Druckbehälters (8, 8', 8'') aus dem zumindest einen ersten Verbindungsanschluss (3) strömt, wobei das längliche Element (66) innerhalb der Hülse (14) in einer ersten axialen Richtung der Hülse (14) verschiebbar angeordnet ist, sodass, wenn ein Ventil (25) eines aufzupumpenden Reifens mit dem ersten Verbindungsanschluss (3) verbunden ist, das längliche Element in der ersten axialen Richtung verschoben wird und dadurch das Dichtungselement (64) vom Gehäuse (2) wegbewegt, wodurch der Durchgang von Luft aus dem Inneren des Druckbehälters (8, 8', 8'') durch den Fluidkanal (15) zum zumindest einen ersten Verbindungsanschluss (3) ermöglicht wird.

3. Vorrichtung nach Anspruch 2, wobei das längliche Element (66) als ein Rohr oder Zylinder mit einer Umfangswand ausgebildet ist und zumindest eine zentrale Öffnung (64) umfasst und zumindest einen Durchgang (61) umfasst, der in radialer Richtung die Rohrwand durchdringt und/oder wobei das erste Ventil (5) eine Rückstellfeder (62) umfasst, die eine Kraft auf den Ventilkörper (60) ausübt, sodass, wenn kein Ventil (25) mit dem ersten Verbindungsanschluss (3) verbunden ist, dieses Dichtungselement (70) mit einer bestimmten Kraft gegen das Gehäuse (2) gedrückt wird.

4. Vorrichtung (1) nach einem der vorangehenden Ansprüche, wobei der erste Verbindungsanschluss (3) so ausgebildet ist, dass er direkt mit einem Reifenventil (25) verbunden werden kann, oder wobei die Vorrichtung (1) so konfiguriert ist, dass ein Adapter verwendet werden kann, um eine Verbindung zwischen der Vorrichtung (1) und einem Reifenventil (25) herzustellen; und/oder wobei das zweite Ventil (9) ein standardisiertes Reifenventil ist.

5. Vorrichtung (1) nach einem der vorangehenden Ansprüche, wobei das zweite Ventil (9) als ein Druckentlastungsventil dient, das den Druck begrenzt, der auf den Druckbehälter (8, 8', 8'') ausgeübt werden kann.

6. Vorrichtung (1) nach einem der vorangehenden Ansprüche, wobei das am zweiten Verbindungsanschluss (4, 4', 4'') angeordnete Verbindungsmittel (6) ein Gewinde (6) umfasst.

7. Vorrichtung (1) nach Anspruch 6, wobei das Gewinde (6) angeordnet ist, um Druck aus dem Fluidkanal (15) abzulassen, wenn der Druck einen bestimmten Schwellenwert überschreitet; und/oder wobei das Gewinde (6) mit einem Gegengewinde in Eingriff steht, das am Druckbehälter (8, 8', 8'') angeordnet ist, um mit der Vorrichtung (1) verbunden zu sein.

8. Vorrichtung (1) nach einem der vorangehenden Ansprüche, wobei der zumindest eine zweite Verbindungsanschluss derart gestaltet ist, um mit einer Kunststoffflasche, beispielsweise einer Kunststofftrinkflasche, die der Druckbehälter (8, 8', 8'') ist, verbunden zu sein; wobei insbesondere das Verbindungsmittel einem Außengewinde der Kunststofftrinkflasche entspricht.

9. Vorrichtung (1) nach einem der vorangehenden Ansprüche, wobei der Querschnitt des Fluidkanals (15) zwischen dem zweiten Verbindungsanschluss (4, 4', 4'') und dem Bereich am ersten Verbindungsanschluss (3) im Wesentlichen konstant bleibt.

10. Vorrichtung (1) nach einem der vorangehenden Ansprüche, wobei die Vorrichtung (1) mehrere zweite Verbindungsanschlüsse (4, 4', 4'') umfasst, wobei insbesondere zwei zweite Verbindungsanschlüsse (4) in einem Winkel zueinander angeordnet sind.

11. Vorrichtung (1) nach einem der vorangehenden Ansprüche, wobei das Gehäuse (2) und/oder der Fluidkanal (15) eine sich verengende Geometrie aufweist/aufweisen.

12. Vorrichtung (1) nach einem der vorangehenden Ansprüche, wobei die Vorrichtung (1) ein drittes Ventil (50) umfasst das so angeordnet ist, dass es Druckluft aus dem Inneren eines mit der Vorrichtung (1) verbundenen Druckbehälters (8, 8', 8'') freigibt, wenn die Druckdifferenz zwischen dem Inneren des Druckbehälters (8, 8', 8'') und dem Äußeren einen bestimmten Wert überschreitet.

13. Pumpeinrichtungsanordnung (40), umfassend:
a. eine Vorrichtung (1) nach einem der vorangehenden Ansprüche und
b. zumindest einen Druckbehälter (8, 8', 8''), der mit zumindest einem zweiten Verbindungsanschluss (4, 4', 4'') der Vorrichtung (1) verbunden ist.

## Revendications

1. Dispositif (1) pour gonfler un pneu (23), comprenant
a. un boîtier (2), ledit boîtier (2) comprenant
i. au moins un premier orifice de connexion (3) et
ii. au moins un deuxième orifice de connexion (4, 4', 4'') comprenant un moyen de connexion (6) pour interconnecter le dispositif (1) avec un réservoir sous pression (8, 8', 8'') et
iii. l'au moins un premier orifice de connexion (3) étant connecté fluidiquement à l'au moins un deuxième orifice de connexion (4, 4', 4'') au moyen d'un passage de fluide (15) et
b. le dispositif (1) comprenant en outre une première valve (5) et
c. lorsqu'un réservoir sous pression (8, 8', 8'') est connecté à l'au moins un deuxième orifice de connexion (4, 4', 4''),
i. la première valve (5), dans un état fermé, est apte à empêcher que de l'air ne s'écoule depuis l'intérieur du réservoir sous pression (8, 8', 8'') hors de l'au moins un premier orifice de connexion (3) et
ii. la première valve (5), dans un état ouvert, est apte à permettre le passage d'air depuis l'intérieur du réservoir sous pression (8, 8', 8'') à travers le passage de fluide (15) jusqu'à l'au moins un premier orifice de connexion (3),
d. le dispositif (1) comprenant en outre une deuxième valve (9) qui peut être connectée à un gonfleur (30) et qui peut être utilisée afin de pressuriser le réservoir sous pression (8, 8', 8'') avec de l'air lorsqu'il est connecté au dispositif (1), et
e. la première valve (5) étant un clapet antiretour,
**caractérisé en ce que**
f. le clapet antiretour est un clapet à battant qui est agencé de manière à commuter de l'état fermé à l'état ouvert lorsqu'une valve (25) d'un pneu (23) devant être gonflé est interconnectée avec le premier orifice de connexion (3).

2. Dispositif (1) pour gonfler un pneu (23), comprenant
a. un boîtier (2), ledit boîtier (2) comprenant
i. au moins un premier orifice de connexion (3) et
ii. au moins un deuxième orifice de connexion (4, 4', 4'') comprenant un moyen de connexion (6) pour interconnecter le dispositif (1) avec un réservoir sous pression (8, 8', 8'') et
iii. l'au moins un premier orifice de connexion (3) étant connecté fluidiquement à l'au moins un deuxième orifice de connexion (4, 4', 4'') au moyen d'un passage de fluide (15) et
b. le dispositif (1) comprenant en outre une première valve (5) et
c. lorsque le réservoir sous pression (8, 8', 8'') est connecté à l'au moins un deuxième orifice de connexion (4, 4', 4''),
i. la première valve (5), dans un état fermé, est apte à empêcher que de l'air ne s'écoule depuis l'intérieur du réservoir sous pression (8, 8', 8'') hors de l'au moins un premier orifice de connexion (3) et
ii. la première valve (5), dans un état ouvert, est apte à permettre le passage d'air depuis l'intérieur du réservoir sous pression (8, 8', 8'') à travers le passage de fluide (15) jusqu'à l'au moins un premier orifice de connexion (3),
d. le dispositif (1) comprenant en outre une deuxième valve (9) qui peut être connectée à un gonfleur (30) et qui peut être utilisée afin de pressuriser le réservoir sous pression (8, 8', 8'') avec de l'air lorsqu'il est connecté au dispositif (1), et
e. la première valve (5) étant un clapet antiretour,
**caractérisé en ce que**
f. l'au moins un premier orifice de connexion (3) comprend un manchon (14) et le clapet antiretour comprend un corps de valve (60) qui présente un organe allongé (66), ledit organe allongé (66) étant au moins en partie arrangé à l'intérieur du manchon (14) lorsque le clapet antiretour est dans l'état fermé, et le corps de valve (60) comprenant un organe d'étanchéité (64) qui, dans l'état fermé, est en contact étanche avec le boîtier (2) et empêche ainsi que de l'air ne s'écoule depuis l'intérieur du réservoir sous pression (8, 8', 8'') hors de l'au moins un premier orifice de connexion (3), l'organe allongé (66) étant disposé de manière déplaçable à l'intérieur du manchon (14) dans une première direction axiale du manchon (14), de telle sorte que lorsqu'une valve (25) d'un pneu devant être gonflé est interconnectée avec le premier orifice de connexion (3), l'organe allongé soit déplacé dans la première direction axiale et déplace ainsi l'organe d'étanchéité (64) à l'écart du boîtier (2) en permettant le passage d'air depuis l'intérieur du réservoir sous pression (8, 8', 8'') à travers le passage de fluide (15) jusqu'à l'au moins un premier orifice de connexion (3).

3. Dispositif selon la revendication 2, dans lequel l'organe allongé (66) a la forme d'un tube ou d'un cylindre ayant une paroi périphérique et comprenant au moins une ouverture centrale (64), et comprenant au moins une orifice (61) qui pénètre le tube dans la direction radiale; et/ou dans lequel la première valve (5) comprend un ressort de rappel (62) qui applique une force sur le corps de valve (60) de telle sorte que lorsqu'aucune valve (25) n'est interconnectée avec le premier orifice de connexion (3), cet organe d'étanchéité (70) soit pressé contre le boîtier (2) avec une certaine force.

4. Dispositif (1) selon l'une quelconque des revendications précédentes, dans lequel le premier orifice de connexion (3) est formé de telle sorte qu'il puisse être connecté directement à une valve de pneu (25), ou le dispositif (1) est configuré de telle sorte qu'un adaptateur puisse être utilisé afin d'établir une connexion entre le dispositif (1) et une valve de pneu (25) ; et/ou la deuxième valve (9) est une valve de pneu standardisée.

5. Dispositif (1) selon l'une quelconque des revendications précédentes, dans lequel la deuxième valve (9) sert de valve de détente de pression qui limite la pression qui peut être appliquée au réservoir sous pression (8, 8', 8'').

6. Dispositif (1) selon l'une quelconque des revendications précédentes, dans lequel le moyen de connexion (6) disposé au niveau du deuxième orifice de connexion (4, 4', 4'') comprend un filetage (6).

7. Dispositif (1) selon la revendication 6, dans lequel le filetage (6) est prévu pour relâcher la pression du passage de fluide (15) si la pression dépasse une certaine limite seuil ; et/ou dans lequel le filetage (6) vient en prise avec un filetage correspondant disposé au niveau du réservoir sous pression (8, 8', 8'') prévu pour être interconnecté avec le dispositif (1).

8. Dispositif (1) selon l'une quelconque des revendications précédentes, dans lequel l'au moins un deuxième orifice de connexion est conçu pour être interconnecté avec une bouteille en plastique, par exemple une bouteille à boisson en plastique, qui constitue le réservoir sous pression (8, 8', 8'') ; en particulier dans lequel le moyen de connexion correspond à un filetage extérieur d'une bouteille à boisson en plastique.

9. Dispositif (1) selon l'une quelconque des revendications précédentes, dans lequel la section transversale du passage de fluide (15) reste essentiellement constante entre le deuxième orifice de connexion (4, 4', 4'') et la région au niveau du premier orifice de connexion (3).

10. Dispositif (1) selon l'une quelconque des revendications précédentes, le dispositif (1) comprenant une pluralité de deuxièmes orifices de connexion (4, 4', 4''), en particulier deux deuxièmes orifices de connexion (4) disposés suivant un certain angle l'un par rapport à l'autre.

11. Dispositif (1) selon l'une quelconque des revendications précédentes, dans lequel le boîtier (2) et/ou le passage de fluide (15) présente(nt) une géométrie se rétrécissant.

12. Dispositif (1) selon l'une quelconque des revendications précédentes, le dispositif (1) comprenant une troisième valve (50) disposée de manière à relâcher de l'air sous pression depuis l'intérieur d'un réservoir sous pression (8, 8', 8'') interconnecté au dispositif (1) si la différence de pression entre l'intérieur du réservoir sous pression (8, 8', 8'') et l'extérieur dépasse une valeur spécifique.

13. Ensemble de gonfleur (40) comprenant
a. un dispositif (1) selon l'une quelconque des revendications précédentes et
b. au moins un réservoir sous pression (8, 8', 8'') connecté à au moins un deuxième orifice de connexion (4, 4', 4'') du dispositif (1).
